# EUROPÄISCHE PATENTSCHRIFT

(11) **EP 1 526 619 B1**
(45) Veröffentlichungstag und Bekanntmachung des Hinweises auf die Patenterteilung: **21.01.2009**
(21) Anmeldenummer: 04021288.8
(22) Anmeldetag: 08.09.2004
(51) Int. Cl.: H02B 1/06

(54) **Verteilerschrank mit einer plombierbaren Abdeckplatte**
Electrical cabinet with tamper-proof cover plate
Armoire électrique avec panneau de couverture inviolable

(30) Priorität: 21.10.2003 DE 20316098 U
(43) Veröffentlichungstag der Anmeldung: 27.04.2005
(73) Patentinhaber: ABB AG, 68309 Mannheim (DE)
(72) Erfinder: Roth, Michael, 77886 Lauf (DE); Schaaf, Harry, 77836 Rheinmünster (DE)

(56) Entgegenhaltungen:
- FR-A- 2 615 667

## Beschreibung

Die Erfindung betrifft einen Verteilerschrank für eine elektrische Haus- oder Gebäudeinstallation.

Ein derartiger Verteilerschrank (FR2615667) ist zusammengesetzt aus einem Gehäuseunterteil, das mit der Bodenaußenfläche gegen eine senkrecht verlaufende Wand angelegt und daran befestigt wird. Der Verteilerschrank trägt im Inneren auf der Innenfläche der Bodenwand angebrachte Halte- und Befestigungsmittel, beispielsweise Hutprofiltragschienen, auf denen elektrische Installationsgeräte, Leitungsschutzschalter, Fehlerstromschutzschalter und dergleichen aufgerastet werden können. Damit die Installationsgeräte auch nach dem Aufbringen eine Art Deckplatte sichtbar sind, besitzt die Abdeckplatte Ausnehmungen, deren Breite, in vertikaler Richtung gesehen, wenn der Verteilerschrank eingebaut ist, der Breite der Installationsgeräte entspricht, so dass deren Frontwand oder gegebenenfalls deren vordere Frontwand von vorne zugänglich ist.

Die Befestigung der Abdeckplatte erfolgt über Haltestege, die auf der Innenfläche der Bodenplatte des Gehäuseunterteils aufgesetzt sind, und an der vertikal verlaufenden Seitenkante des Gehäuseunterteils ist eine Tür gelenkig angebracht, mit der der Verteilerschrank verschlossen werden kann.

Damit ein unbefugter Zugang zum Inneren des Verteilerschrankes unmöglich gemacht wird, ist eine Plombierung erforderlich, mit der die Abdeckplatte mit dem Gehäuseunterteil gekoppelt ist.

Aufgabe der Erfindung ist es, einen Verteilerschrank der eingangs genannten Art zu schaffen, bei dem die Nachteile der bekannten Verteilerschränke vermieden werden.

Diese Aufgabe wird erfindungsgemäß gelöst durch die Merkmale des Anspruches 1.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung näher erläutert und beschrieben werden.

Es zeigen:

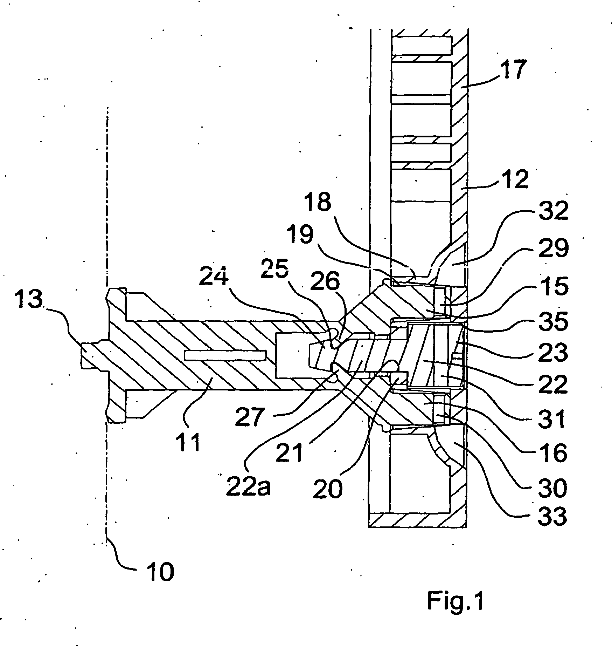

- Fig. 1: eine Schnittansicht durch einen Haltesteg mit einer Abdeckplatte, die auf dem Haltesteg montiert ist,
- Fig. 2: eine perspektivische Darstellung des Haltesteges mit der Abdeckplatte, von unten und
- Fig. 3: eine Abdeckplatte in perspektivischer Darstellung, von der Frontseite.

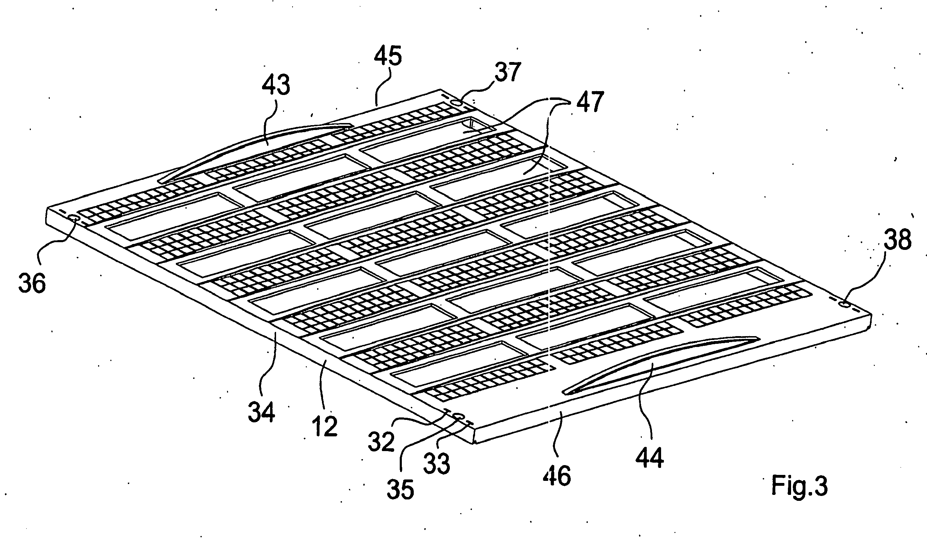

Auf einem strichliert dargestellten Bodenabschnitt 10 eines Gehäuseunterteils für einen Installationsverteilerschrank ist ein Haltesteg 11 senkrecht dazu aufgesetzt und daran befestigt, an dem eine Abdeckplatte 12 (siehe Fig. 3) fixiert ist.

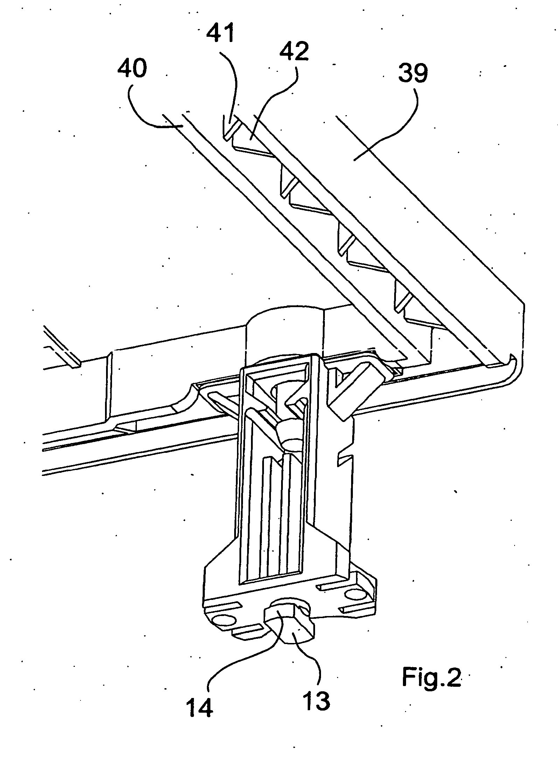

Der Haltesteg 11 besitzt an seinem einen Ende einen axial vorspringenden Zapfen 13, der, wie aus Fig. 2 ersichtlich ist, eine T-Form aufweist, wobei der Quersteg 14 der T-Form in ein entsprechendes Langloch an der Bodenwand 10 eingesetzt ist, so dass der Querschnitt hinter entsprechende Kanten an der Öffnung im Bodenteil 10 greift. Dadurch kann der Haltesteg nicht mehr vom Bodenteil entfernt werden, es sei denn, er wird dergestalt verdreht, dass der Quersteg 14 mit einem entsprechenden Langloch im Bodenteil 10 fluchtet.

An dem entgegengesetzt liegenden Ende besitzt der Haltesteg 11 zwei parallel verlaufende Vorsprünge 15 und 16, die sich in gleiche Richtung wie die Längserstreckung des Haltesteges 11 erstrecken.

Die Abdeckplatte 12 besitzt an ihrer Frontwand 17 einen kragenförmigen Einzug 18, der nach innen vorspringt, und eine Aufnahmeöffnung 19, in die die Vorsprünge 15 und 16 einfügbar sind, wobei der Kragen 18 einen Rücksprung 20 aufweist, der eine Mittelbohrung 21 besitzt, durch die ein Rastelement 22 hindurch gesteckt werden kann, welches einen Kopf 23 aufweist, der gegen den Rücksprung 20 der Abdeckplatte 12 im montiert ten Zustand zum Anliegen kommt. An dem dem Kopf entgegengesetzten Ende besitzt das Halteelement 22 eine umlaufende Rastnase 24, die durch eine umlaufende Rille 25 gebildet ist. Die Vorsprünge 15 und 16 setzen sich hin zum anderen Ende innerhalb bzw. zwischen den Vorsprüngen 15 und 16 fort in federnde Rastvorsprünge 26 und 27, die dann in die umlaufende Rille 25 einschnappen. Im Bereich ihrer freien Ende besitzen die Vorsprünge 15 und 16 jeweils ein Durchgangsloch 29 und 30; in gleicher Weise besitzt der Kopf 23 ein Durchgangsloch 31, wobei im korrekt montierten Zustand die Durchgangslöcher 29 und 30 und 31 fluchten. Der Rücksprung 20 bildet dabei einen Durchbruch 35, dessen Innendurchmesser dem Außendurchmesser des Kopfes 23 entspricht. In gleicher Weise ist der Innendurchmesser der Mittelbohrung 21 des Rücksprunges 20 so bemessen, dass das Rastelement 22 hindurchpasst.

Weiterhin besitzt die Abdeckplatte 12 im Bereich der Frontwand 17 schlitzartige Vertiefungen 32 und 33, die im Inneren eine Bogenform besitzen und dabei in die Durchgangslöcher29, 30 quasi einmünden bzw. diese freigeben. Die Fig. 3 zeigt die beiden schlitzartigen Vertiefungen 32 und 33, die parallel zur im montierten Zustand senkrecht verlaufenden Längskante 34 verlaufen.

Zur Fixierung der Abdeckplatte sind vier Haltestege vorgesehen, die im Bereich der Ecken der Bodenwand 10 des Verteilerschrankes befestigt und fixierbar sind; demgemäss besitzt die Abdeckplatte 12 im Bereich der vier Ecken Durchbrüche 35 und 36 bzw. 37 und 38, denen jeweils die Vertiefungen 32 und 33 zugeordnet sind.

Zur Plombierung wird ein Plombierdraht beispielsweise in die Vertiefung 32 eingefädelt und durch die Durchgangslöcher 29, 31 und 30 hindurchgefädelt, so dass der Plombierdraht durch die Vertiefung 33 wieder zum Vorschein kommt; danach kann die Abdeckplatte 12 plombiert werden, so dass sie nicht mehr herausziehbar ist, es sei denn durch Beschädigung des Plombierdrahtes.

Auf der der Bodenwand zugewandten Seite besitzt die Abdeckplatte umlaufende, senkrecht dazu angeordnete Doppelverstärkungswandungen 39 und 40, zwischen denen zickzackförmig angeordnete Versteifungswände 41, 42 usw. angeordnet sind, so dass auf diese Weise die Abdeckplatte weiter versteift wird.

Eine zusätzliche Versteifung erfährt die Abdeckplatte 12 durch parallel verlaufenden bogenförmige Griffelemente 43 und 44, die an den im montierten Zustand horizontal verlaufenden Seitenkanten 45 und 46 parallel zu diesen angeordnet sind.

Die Abdeckwand 12 oder Abdeckplatte 12 besitzt rechteckförmige Öffnungen 47, durch die hindurch die Frontseiten der darunter angeordneten Installationsgeräte zugänglich sind.

Das Rastelement 22 besitzt einen zapfenartigen Bereich 22a, dessen Querschnitt kreisförmig ist, und den Kopf 23, wobei der Außendurchmesser des Kopfes 23 größer ist als der Außendurchmesser des Zapfens 22a. An dem dem Kopf 23 entgegengesetzt liegenden Ende des Zapfens 22a befinden sich die Rille 25 und damit auch die Rastnase 24.

## Patentansprüche

1. Verteilerschrank für eine elektrische Haus- oder Gebäudeinstallation, mit einem Gehäuseunterteil, mit einer eine Abdeckplatte (12) aufweisenden Abdeckung für in den Schrank einbaubare elektrische Installationsgeräte, wobei die Abdeckung mittels Haltestegen (11) am Gehäuseunterteil fixierbar und plombierbar ist,und wobei die Abdeckplatte (12) an jedem Haltesteg (11) mit einem die Abdeckplatte (12) durchgreifenden Rastelement (22) fixierbar ist, das einen in eine Vertiefung (35) der Abdeckplatte (12) versenkbaren Kopf (23) aufweist **dadurch gekennzeichnet dass** der Haltesteg (11) in Längserstreckung des Haltesteges (11) verlaufende Vorsprünge (15, 16) aufweist, die den Kopf (23) beidseitig überdecken.

2. Verteilerschrank nach Anspruch 1, **dadurch gekennzeichnet, dass** in den Vorsprüngen (15,16) in wenigstens einem der Haltestege (11) und im Kopf (23) eine senkrecht zur Mittelachse des Rastelementes (22) verlaufende Durchgangslöcher (29, 30; 31) vorgesehen sind, durch die ein Plombierdraht hindurchführbar ist.

3. Verteilerschrank nach Anspruch 2, **dadurch gekennzeichnet, dass** die Abdeckplatte (12) im Bereich der Plombierstelle bogenförmige, in einer Ebene liegende Vertiefungen (32, 33) aufweist, deren dem Kopf (23) zugewandten Enden die Durchgangslöcher (29, 30) in den Vorsprüngen (15, 16) freigeben, so dass der Plombierdraht auch durch die Vertiefungen (32, 33) in der Abdeckplatte (12) hindurch führbar ist.

## Claims

1. Distribution cabinet for an electrical house or building installation, with a lower housing part, with a covering for electrical installation equipment which can be installed in the cabinet, the covering being able to be fixed and lead-sealed on the lower housing part by means of holding legs, the covering plate (12) being able to be fixed on each holding leg (11) by a latching element (22), which reaches through the covering plate (12) and has a head (23) which can be lowered into a recess (35) in the covering plate (12), **characterized in that** the holding leg (11) has projections (15, 16) which run in the longitudinal extent of the holding leg (11) and cover the head (23) on both sides.

2. Distribution cabinet according to Claim 1, **characterized in that** through-holes (29, 30; 31), which run perpendicularly to the centre axis of the latching element (22) and through which a sealing wire can be passed, are provided in the projections (15, 16), in at least one of the holding legs (11), and in the head (23).

3. Distribution cabinet according to Claim 2, **characterized in that** the covering plate (12) has in the region of the sealing location arcuate recesses (32, 33), which lie in one plane and the ends of which towards the head (23) leave the through-holes (29, 30) in the projections (15, 16) clear, so that the sealing wire can also be passed through the recesses (32, 33) in the covering plate (12).

## Revendications

1. Armoire de distribution pour une installation électrique de maison ou de bâtiment, avec une partie inférieure de boîtier, avec un couvercle pour des appareils d'installation électrique pouvant être montés dans l'armoire, le couvercle pouvant être fixé au moyen de barrettes de maintien sur la partie inférieure du boîtier et plombé, dans laquelle la plaque de couverture (12) peut être fixée sur chaque barrette de maintien (11) avec un élément d'encliquetage (22) traversant la plaque de couverture (12) et présentant une tête (23) qui peut être enfoncée dans un creux (35) de la plaque de couverture (12), **caractérisée en ce que** la barrette de maintien (11) présente des saillies (15, 16) dirigées dans le sens longitudinal de la barrette de maintien (11), qui recouvrent la tête (23) des deux côtés.

2. Armoire de distribution selon la revendication 1, **caractérisée en ce qu'**il est prévu dans les saillies (15, 16) dans au moins une des barrettes de maintien (11) et dans la tête (23) des trous traversants (29, 30 ; 31) perpendiculaires à l'axe médian de l'élément d'encliquetage (22), à travers lesquels un fil de plomb peut être passé.

3. Armoire de distribution selon la revendication 2, **caractérisée en ce que** la plaque de couverture (12) présente au niveau du plomb des creux (32, 33) en arc de cercle se trouvant dans un même plan, dont l'extrémité tournée vers la tête (23) dégage les trous traversants (29, 30) dans les saillies (15, 16), de telle sorte que le fil du plomb puisse aussi être passé à travers les creux (32, 33) de la plaque de couverture (12).
